# EUROPÄISCHE PATENTSCHRIFT

(11) **EP 2 595 761 B1**
(45) Veröffentlichungstag und Bekanntmachung des Hinweises auf die Patenterteilung: **23.09.2020**
(21) Anmeldenummer: 11733808.7
(22) Anmeldetag: 16.07.2011
(51) Int. Cl.: B05B 13/02, B25J 5/02, B25J 21/00

(54) **MODULARE ANLAGE ZUR OBERFLÄCHENBEHANDLUNG VON GEGENSTÄNDEN**
MODULAR LINE FOR SURFACE TREATMENT
LIGNE DE TRAITEMENT DE SURFACE MODULAIRE

(30) Priorität: 24.07.2010 DE 102010032143
(43) Veröffentlichungstag der Anmeldung: 29.05.2013
(73) Patentinhaber: Eisenmann SE, 71032 Böblingen (DE)
(72) Erfinder: SCHMID, Ulrich, 72135 Dettenhausen (DE); FERNHOLZ, Jürgen, 71083 Herrenberg (DE); SCHMIDT, Roger, 72135 Dettenhausen (DE); MEIER, Ralph, 71111 Waldenbuch (DE); HANF, Jürgen, 72070 Tübingen (DE)
(74) Vertreter: Ostertag & Partner Patentanwälte mbB
(86) Internationale Anmeldenummer: PCT/EP2011/003562
(87) Internationale Veröffentlichungsnummer: WO 2012/016637

(56) Entgegenhaltungen:
- EP-A1- 0 369 483
- EP-A1- 0 723 817
- EP-A1- 2 072 145
- EP-A1- 2 409 777
- DE-A1- 3 340 510
- DE-A1- 3 933 745
- DE-A1- 19 610 688
- DE-A1-102006 005 629

## Beschreibung

Die Erfindung betrifft eine Anlage zur Oberflächenbehandlung von Gegenständen, insbesondere von Karosserieteilen, mit
a) wenigstens zwei Behandlungskabinen, welche jeweils einen Behandlungsraum vorgeben;
b) einer Fördereinrichtung, mittels welcher die Gegenstände entlang einer Förderstrecke an jeweils eine der Behandlungskabinen heran, in den Behandlungsraum dieser Behandlungskabine hinein, aus dem Behandlungsraum dieser Behandlungskabine heraus und von dieser Behandlungskabine weg förderbar sind;
   wobei
c) jede Behandlungskabine von jeweils einer modularen Einheit in Form eines Behandlungsmoduls umfasst ist, welche als solche bewegbar ist und lösbar in einer Betriebsposition bezogen auf die Förderstrecke angeordnet und fixiert ist.

In derartigen vom Markt her bekannten Anlagen werden zu behandelnde Gegenstände, im Falle von Karosserieteilen beispielsweise Stoßfänger, im Durchlauf durch mehrere Behandlungskabinen geführt, wobei in jeder Behandlungskabine ein eigener Behandlungsschritt durchgeführt wird. Hierzu sind verschiedene Behandlungskabinen, die einem unterschiedlichen Zweck dienen, voneinander verschieden aufgebaut.

Mit einer Anlage zur Oberflächenbehandlung von Gegenständen in Form einer Lackieranlage befasst sich beispielsweise die EP 2 409 777 A1.

Bei einer üblichen Oberflächenbehandlungsanlage für Stoßfänger sind beispielsweise voneinander verschiedene Behandlungskabinen für eine Vorbehandlung und Reinigung, für verschiedene Lackaufträge, für ein Abdunsten und für diverse Nachbehandlungen wie beispielsweise Trocknen vorgesehen.

Die für unterschiedliche Verwendungszwecke vorgesehenen Behandlungskabinen werden jeweils separat hergestellt und in einer Endmontage in der gewünschten Anordnung und Reihenfolge montiert, wobei auch alle notwendigen Versorgungsleitungen für Elektrik und Verbrauchsmittel installiert werden. Ein Änderung der Abfolge der einzelnen Behandlungskabinen oder eine Änderung der Funktion einer bestimmten Behandlungskabine ist nach der Montage der Anlage nur noch mit großem Aufwand möglich.

Es kommt jedoch vor, dass eine individuelle Anpassung der Abfolge der Behandlungsschritte notwendig wird, wenn sich die Art der zu behandelnden Gegenstände ändert oder das Behandlungsverfahren bei gleichen Gegenständen mit einer anderen Schrittabfolge oder einer anderen Art der Behandlung durchgeführt werden soll.

Es ist daher Aufgabe der vorliegenden Erfindung, eine Oberflächenbehandlungsanlage der eingangs genannten Art zu schaffen, welche auf verhältnismäßig einfache Weise flexibel an unterschiedlich zu behandelnde Gegenstände angepasst werden kann.

Diese Aufgabe wird bei einer Anlage zur Oberflächenbehandlung von Gegenständen der eingangs genannten Art dadurch gelöst, dass
d) entlang der Förderstrecke eine oder mehrere Führungsschienen angeordnet sind, auf welchen eine jeweilige modulare Einheit verfahrbar ist.

Die Anlage ist somit aus bewegbaren modularen Einheiten aufgebaut, deren Betriebsposition in der Anlage nicht fest ist, sondern auf Grund der Beweglichkeit der modularen Einheiten verhältnismäßig leicht verändert werden kann. Vorzugsweise folgen bei diesem modularen Konzept modulare Einheiten mit funktionsgemäß unterschiedlichen Behandlungskabinen, in denen verschiedene Behandlungsschritte durchgeführt werden, einem gemeinsamen baulichen Grundkonzept. Hierdurch können die Baukosten für die funktionsgemäß unterschiedlichen Behandlungsmodule relativ gering gehalten werden. Alternativ kann jedoch auch jedes Behandlungsmodul einen eigenen individuellen Aufbau haben; für die Möglichkeit, die Oberflächenbehandlungsanlage bei einem Wechsel der zu behandelnden Gegenstände verhältnismäßig schnell und unkompliziert an die geforderten Behandlungsschritte anzupassen, ist vornehmlich die Beweglichkeit und damit die Flexibilität der modularen Einheiten verantwortlich. Durch die Führungsschienen können die modularen Einheiten können sicher bewegt werden.

Für einen unkomplizierten Austausch eines Behandlungsmoduls für einen bestimmten Behandlungsschritt gegen ein Behandlungsmodul für einen anderen Behandlungsschritt ist es vorteilhaft, wenn jedes Behandlungsmodul eine standardisierte Anschlusseinheit mit Anschlüssen für zum Betrieb des Behandlungsmoduls erforderliche Verbrauchsmittel, insbesondere mit Anschlüssen für alle zum Betrieb des Behandlungsmoduls erforderliche Verbrauchsmittel, umfasst. In diesem Fall umfasst die Anlage vorzugsweise fest installierte Adaptereinheiten, denen alle Versorgungsmedien und elektrische Versorgungsleitungen zugeführt werden und welche zu den Anschlusseinheiten der Behandlungsmodule passen. Diese Adaptereinheiten können so installiert sein, dass sie automatisch mit jeweils einer Anschlusseinheit eines Behandlungsmoduls gekoppelt werden, wenn dieses in seine Betriebsposition bewegt wird. Zu Versorgung des Behandlungsmoduls mit Verbrauchsmittel zählt somit auch die Zufuhr elektrischer Energie.

Bei der Oberflächenbehandlung von Gegenständen entsteht bei vielen Behandlungsschritten, insbesondere beim Lackieren, aber auch beim Reinigen oder Trocknen, in der Behandlungskabine bzw. in deren Behandlungsraum Abluft, welche abgeführt und gegebenenfalls aufbereitet werden muss.
Daher ist es besonders günstig, wenn das Behandlungsmodul eine Lufteinheit umfasst, welche in Strömungsverbindung mit dem Behandlungsraum der Behandlungskabine steht und durch welche ein Luftstrom durch den Behandlungsraum erzeugbar ist. Dieser Luftstrom kann dann mittels der Lufteinheit abgeführt werden.

Ferner kann die Lufteinheit vorteilhaft abhängig vom Verwendungszeck des Behandlungsmoduls Komponenten zur Aufbereitung von in dem Behandlungsraum entstehender Kabinenluft umfassen. Als Beispiel für solche Komponenten seien elektrostatisch arbeitende Abscheider zum Abscheiden von beim Lackieren entstehendem Overspray genannt, welcher von Kabinenluft mitgerissen wird, die den Behandlungsraum eines Lackiermoduls durchströmt.

Dem Modulgedanken folgend ist es von Vorteil, wenn die Lufteinheit einen Anschlussflansch umfasst, mit welcher der Strömungsweg der aus dem Behandlungsraum abströmenden Kabinenluft lösbar mit einem Abluftkanal einer zentralen Luftanlage und/oder ein Luftzuführraum der Behandlungskabine lösbar mit einer Frischluftquelle einer zentralen Luftanlage verbindbar ist. Auf diese Weise kann ein Behandlungsmodul auch bei Vorhandensein einer Lufteinheit mit den notwendigen zentralen Anlagenkomponenten verbunden werden.

Es kann günstig sein, wenn die Behandlungsmodule modulare Einheiten einer ersten Art sind und wenigsten eine modulare Einheit einer zweiten Art vorhanden ist, die von den Behandlungsmodulen baulich verschieden ist. Beispielsweise können als modulare Einheiten der zweiten Art Abdunstmodule vorgesehen sein, in denen ein bereits teilbehandelter Gegenstand zum Abdunsten zwischengelagert werden kann. Es kann baulich und herstellungstechnisch einfacher sein, wenn solche funktionsgemäß speziell ausgebildeten Module nicht dem baulichen Grundkonzept der Behandlungsmodule entsprechen. In ihren Abmessungen sind jedoch auch verschiedene Arten von Modulen vorzugsweise kompatibel.

In der Praxis hat es sich als vorteilhaft erwiesen, wenn mehrere Führungsschienen vorgesehen sind, die verschiedenen modularen Einheiten zuordenbar sind und in einem Winkel, insbesondere in einem Winkel von 90°, zur Förderstrecke verlaufen. Auf diese Weise kann eine modulare Einheit aus ihrer Betriebsposition von der Förderstrecke weg oder zur Förderstrecke hin in ihre Betriebsposition bewegt werden, ohne dass bereits fixierte modulare Einheiten bewegt werden müssen und die Gefahr einer Kollision von benachbarten modularen Einheiten verringert ist. Dies kann auch vorteilhaft für Reparatur- oder Wartungszwecke genutzt werden.

Wenn die Führungsschienen Positionsabschnitte für die modularen Einheiten vorgeben, in welchen die modularen Einheiten ihre jeweilige Betriebsposition einnehmen, kann eine skalierte oder einem Aufstellungsraster folgende Anordnung der modularen Einheiten erzielt werden.

Dabei ist es günstig, wenn die Führungsschienen derart angeordnet sind, dass die Positionsabschnitte in gleichmäßigen Abständen entlang der Förderstrecke angeordnet sind.

Im Hinblick auf die Beschickung der Behandlungsräume der Behandlungsmodule mit einem Gegenstand oder dessen Entnahme aus einem entsprechenden Behandlungsraum ist es gut, wenn jedes Behandlungsmodul eine dem Behandlungsraum zugeordnete Drehwand mit einer ersten Wandfläche und einer zweiten Wandfläche, insbesondere einer der ersten Wandfläche gegenüberliegenden zweiten Wandfläche umfasst. Auf diese Weise ist der jeweilige Behandlungsraum gut von außen zugänglich.

Dabei ist es insbesondere günstig, wenn wenigsten eine der Wandflächen eine Halteeinrichtung für zumindest einen zu behandelnden Gegenstand trägt.

Als Alternative zu einer stationären und starren Halteeinrichtung kann es günstig sein, wenn die Halteeinrichtung ein Greifroboter ist.

Um einen Gegenstand von einer modularen Einheit zu einer anderen modularen Einheit fördern zu können, ist es günstig, wenn die Fördereinrichtung wenigstens einen entlang der Förderstrecke verfahrbaren Umsetzroboter umfasst.

Ausführungsbeispiele der Erfindung werden nachfolgend anhand der Zeichnungen näher erläutert. In diesen zeigen:
- Figur 1: eine perspektivische Ansicht einer Anlage zur Oberflächenbehandlung von Karosserieteilen mit mehreren Behandlungsmodulen, bei denen eine Behandlungskabine eine Drehwand aufweist, die einen Förderroboter trägt;
- Figur 2: eine Draufsicht von oben auf die Anlage von Figur 1;
- Figur 3: einen Einlassschleusenbereich der Anlage der Figuren 1 und 2 in vergrößertem Maßstab, wobei drei der Behandlungsmodule des ersten Typs gezeigt sind;
- Figur 4: eine Ansicht von vorne auf ein Lackiermodul der Anlage von Figur 1, wobei die Drehwand der Behandlungskabine eine erste Arbeitsstellung einnimmt;
- Figur 5: eine Ansicht von oben auf das Lackiermodul von Figur 4, wobei die Behandlungskabine horizontal geschnitten ist, so dass der Innenraum der Behandlungskabine mit einer Behandlungseinheit in Form einer Spritzdüsenanordnung zu erkennen ist;
- Figur 6: eine der Figur 5 entsprechende Ansicht des Lackiermoduls, wobei die Drehwand eine gegenüber der ersten Arbeitsstellung verdrehte Zwischenstellung einnimmt;
- Figur 7: eine den Figuren 5 und 6 entsprechende Ansicht des Behandlungsmoduls, wobei die Drehwand eine zweite Arbeitsstellung einnimmt;
- Figur 8: eine Ansicht von vorne auf das Behandlungsmodul von Figur 7, wobei die Drehwand durchscheinend gezeigt ist;
- Figuren 9: bis 11 den Figuren 5 bis 7 entsprechende Ansichten einer Lackierkabine mit einer abgewandelten Behandlungseinheit;
- Figur 12: eine perspektivische Ansicht einer abgewandelten Anlage zur Oberflächenbehandlung von Karosserieteilen mit mehreren abgewandelten Behandlungsmodulen, bei denen eine Behandlungskabine eine Drehwand aufweist, die auf jeder Wandseite eine Halteeinrichtung für jeweils ein Karosserieteil trägt;
- Figur 13: eine Draufsicht von oben auf die Anlage von Figur 12;
- Figur 14: eine Ansicht von vorne auf ein Lackiermodul der Anlage von Figur 12, welches eine Lackierkabine mit einer Drehwand umfasst, die eine erste Arbeitsstellung einnimmt;
- Figur 15: eine Ansicht von oben auf das Lackiermodul von Figur 14, wobei die Behandlungskabine horizontal geschnitten ist und die Drehwand eine gegenüber der ersten Arbeitsstellung verdrehte Zwischenstellung einnimmt.

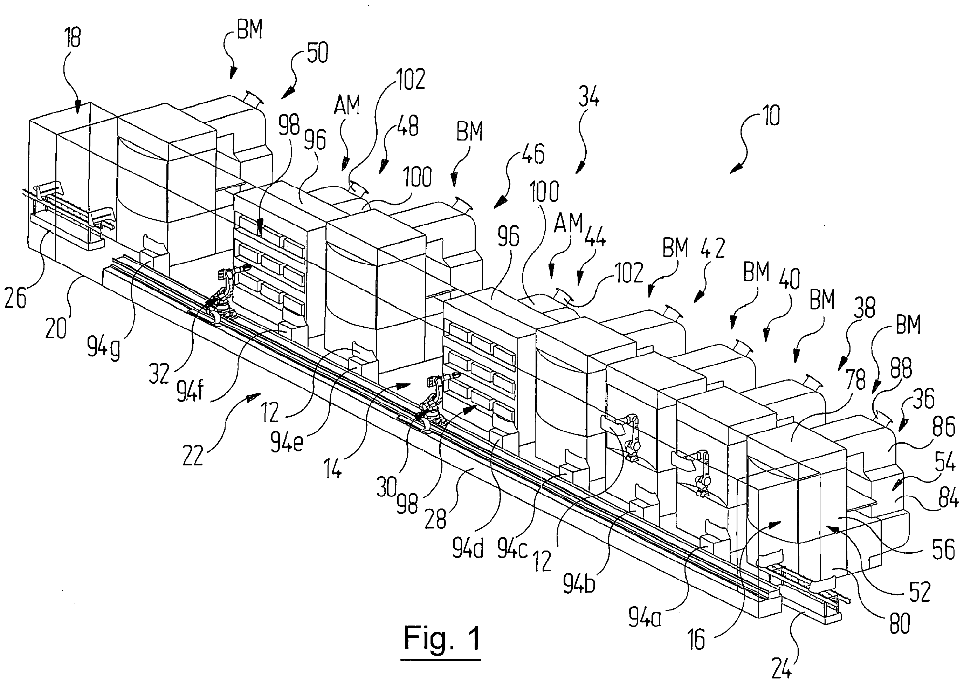

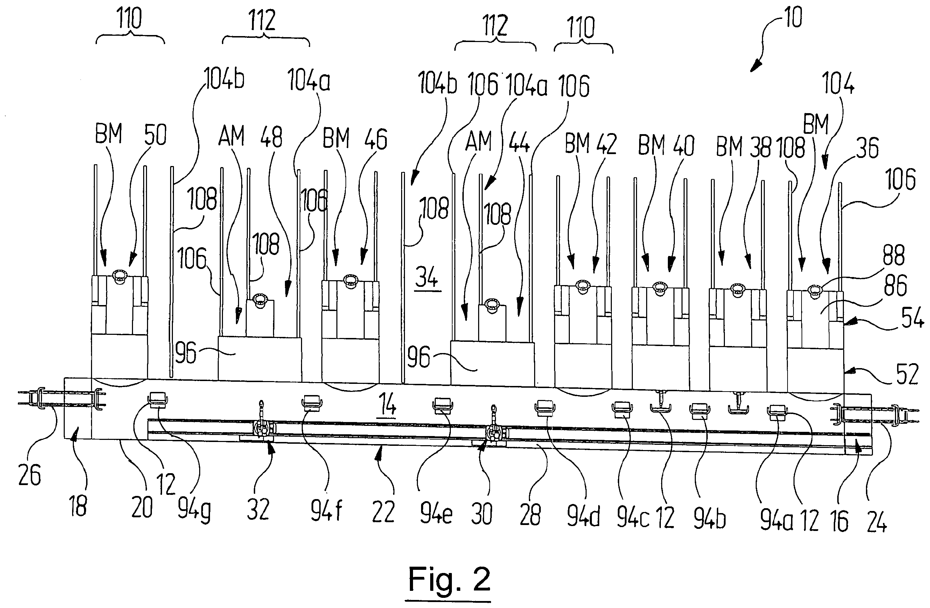

Zunächst wird auf die Figuren 1 und 2 Bezug genommen. Dort ist mit 10 insgesamt eine Behandlungsanlage zur Oberflächenbehandlung von Gegenständen 12 gezeigt, welche beim vorliegenden Ausführungsbeispiel beispielhaft als Karosserieteile in Form von Stoßfängern für Kraftfahrzeuge dargestellt sind.

Mit der Behandlungsanlage 10 können auch andere Gegenstände als Karosserieteile behandelt werden, beispielsweise auch so unterschiedliche Gegenstände wie Weißwaren, Golfbälle, Radioblenden, Fahrzeugräder oder dergleichen.

Die Behandlungsanlage 10 umfasst einen Fördertunnel 14, welcher sich zwischen einer Eingangsschleuse 16 und einer Ausgangsschleuse 18 erstreckt, durch welche die die Behandlungsanlage 10 umgebende Außenatmosphäre von der Tunnelatmosphäre getrennt wird.

Der Fördertunnel 14 ist bereichsweise durch ein Tunnelgehäuse 20 begrenzt. Das Tunnelgehäuse 20, die Eingangsschleuse 16 und die Ausgangsschleuse 18 sind nur in den Figuren 1 bis 3 angedeutet und dort durchscheinend gezeigt, so dass im Fördertunnel 14, in der Eingangsschleuse 16 oder in der Ausgangsschleuse 18 befindliche Komponenten zu erkennen sind. In dem Fördertunnel 14 kann in bekannter Art und Weise eine Inertgasatmosphäre aufrechterhalten werden.

Die zu behandelnden Stoßfänger 12 werden mittels eines Fördersystems 22 durch die Behandlungsanlage 10 gefördert, wobei der Fördertunnel 14 eine entsprechende Förderstrecke vorgibt. Das Fördersystem 22 umfasst einen Zuführförderer 24, mittels welchem die zu behandelnden Stoßfänger 12 in die Eingangsschleuse 16 hinein, durch diese hindurch und nach Abschluss des Schleusenvorgangs weiter in den Fördertunnel 14 gefördert werden. Die zu behandelnden Stoßfänger 12 werden hierzu außerhalb des Fördertunnels 14 mittels einer nicht eigens gezeigten Fördertechnik auf den Zuführförderer 24 gesetzt.

In entsprechender Weise ist ein Abgabeförderer 26 vorhanden, mittels welchem die behandelten Stoßfänger 12 in die Ausgangsschleuse 18 hinein, durch diese hindurch und nach Abschluss des Schleusenvorgangs weiter aus dem Fördertunnel 14 heraus in die Umgebung gefördert werden. Die behandelten Stoßfänger 12 werden außerhalb der Behandlungsanlage 10 mittels einer ebenfalls nicht eigens gezeigten Fördertechnik von dem Abgabeförderer 26 entnommen und ihrer weiteren Bestimmung zugeführt.

Im Fördertunnel 14 erstreckt sich zwischen dem Zuführförderer 24 und dem Abgabeförderer 26 eine Laufschiene 28. Auf dieser laufen beim vorliegenden Ausführungsbeispiel zwei mehrachsige Umsetzroboter 30 und 32 in beide Richtungen verfahrbar, mittels welchen die Stoßfänger 12 gehandhabt werden können und wie sie an und für sich bekannt sind.

Der Fördertunnel 14 ist zu einer Seite hin wenigstens bereichsweise offen und kommuniziert dort über weitgehend seine gesamte Länge mit einem Modulbereich 34. In dem Modulbereich 34 sind entlang des Fördertunnels 14 mehrere Behandlungsmodule BM und zwei Abdunstmodule AM angeordnet, die über den Fördertunnel 14 zugänglich sind. Der Fördertunnel 14 wird somit insgesamt durch das Tunnelgehäuse 20 und die vorhandenen Module begrenzt.

Beim vorliegenden Ausführungsbeispiel sind zwischen der Eingangsschleuse 16 und der Ausgangsschleuse 18 entlang des Fördertunnels 14 folgende Module angeordnet: ein erstes Reinigungsmodul 36 für eine Grundreinigung, ein zweites Reinigungsmodul 38 für eine CO₂-Reinigung oder ein Beflämmen der Stoßfänger 12, ein erstes Lackiermodul 40 zum Auftragen eines ersten Basislacks, ein zweites Lackiermodul 42 zum Auftragen eines zweiten Basislacks, ein erstes Abdunstmodul 44, ein drittes Lackiermodul 46 zum Auftragen eines Farb- oder Klarlacks, ein zweites Abdunstmodul 48 sowie ein Trocknermodul 50, in dem beispielsweise mittels entsprechender Heizaggregate thermisch getrocknet wird. Wenn als Farb- oder Klarlack ein UV-Lack verwendet wird, wird dieser in dem Trocknermodul 50 mittels UV-Strahlung gehärtet.

Die Behandlungsmodule BM sind bis auf die verwendeten und in deren Inneren vorhandenen Behandlungseinheiten baugleich.

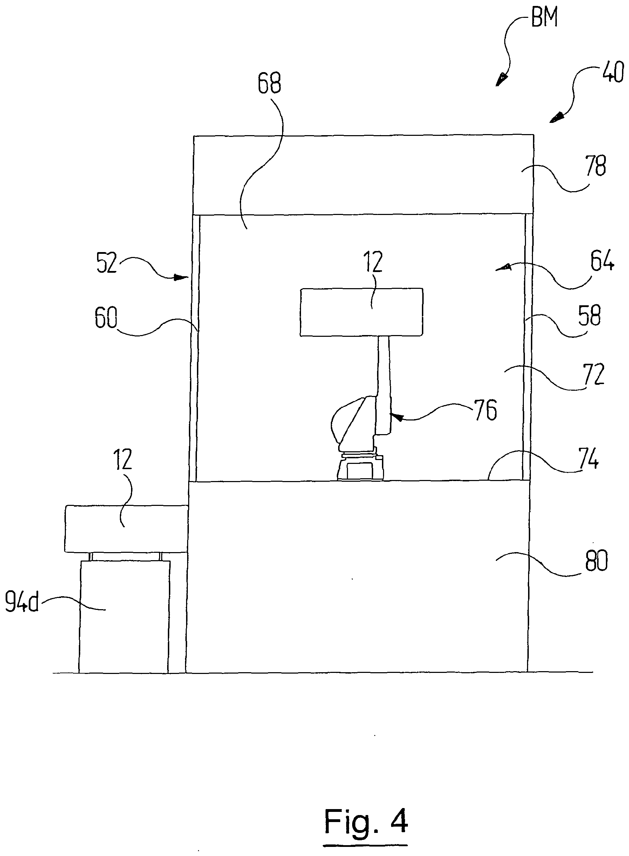

Wie insbesondere in den Figuren 1 bis 3 am Beispiel des ersten Reinigungsmoduls 36 und in den Figuren 4 bis 8 am Beispiel des ersten Lackiermoduls 40 zu erkennen ist, umfasst jedes Behandlungsmodul BM eine Behandlungskabine 52 und eine mit der Behandlungskabine 52 kommunizierende Lufteinheit 54, über welche der Lufthaushalt des Behandlungsmoduls BM gesteuert wird. Bei funktionsgemäß verschiedenen Behandlungsmodulen BM sind somit die jeweiligen Behandlungskabinen 52 zwar baugleich, aber unterschiedlich eingerichtet, so dass sie unterschiedliche Verwendungszwecke erfüllen.

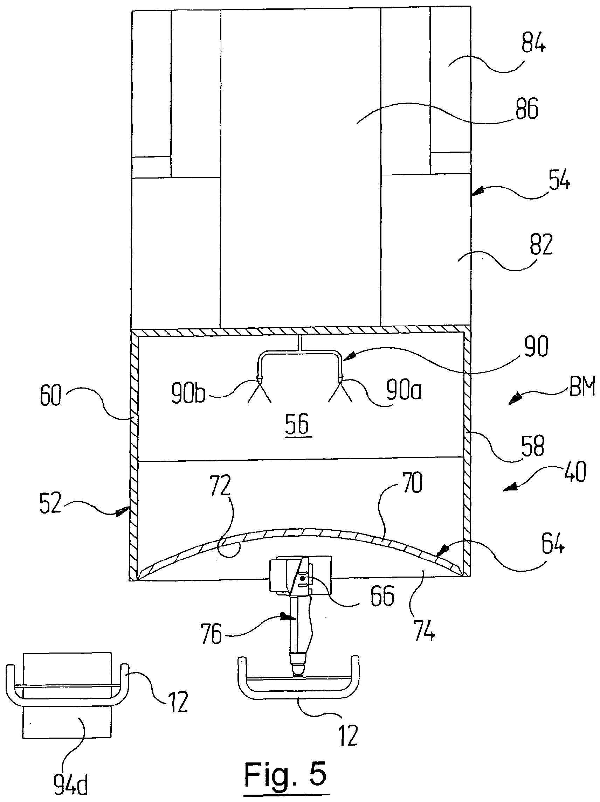

Die Behandlungskabine 52 definiert einen Behandlungsraum 56, welcher auf drei Seiten von vertikalen Seitenwänden 58, 60 und einer senkrecht zu und zwischen diesen verlaufenden vertikalen Kabinenwand 62 begrenzt wird (siehe Figur 5). Der Kabinenwand 62 gegenüberliegend ist eine als Förderelement dienende Drehwand 64 angeordnet, welche um eine vertikale Drehachse 66 verdrehbar gelagert ist.

Bei einer nicht eigens gezeigten Abwandlung kann die Drehachse 66 der Drehwand 64 auch in einem beliebigen Winkel zur Vertikalen und insbesondere horizontal verlaufen.

Der Drehwand 64 sind eine erste und eine zweite Arbeitsstellung zugeordnet, worauf weiter unten nochmals eingegangen wird. In ihren Arbeitsstellungen begrenzt sie den Behandlungsraum 56 auf der der Kabinenwand 62 gegenüberliegenden Seite der Behandlungskabine 52 und trennt den Behandlungsraum 56 räumlich von dem Fördertunnel 14 ab.

Die Drehwand 64 umfasst einen in horizontaler Richtung gleichmäßig gekrümmten Wandteil 68 mit zueinander parallelen vertikalen Rändern und mit zueinander parallelen horizontalen, entsprechend gekrümmten Rändern. Der gekrümmte Wandteil 68 entspricht somit einem Wandabschnitt eines Kreiszylinders und hat eine erste, konvexe, d.h. nach außen gewölbte Wandfläche 70 und eine gegenüberliegende zweite, konkave, d.h. nach innen gewölbte Wandfläche 72. Die vertikalen und horizontalen Ränder des Wandteils 68 tragen jeweils eine flexible Dichtung, beispielsweise ein Gummilamelle, die nicht eigens gezeigt ist.

Die Drehwand 64 umfasst außerdem einen horizontalen Drehboden 74, welcher am unteren Ende des Wandteils 68 auf dessen konkaver Wandfläche 72 angebracht ist, so dass er beim Verdrehen der Drehwand 64 mit verdreht wird.

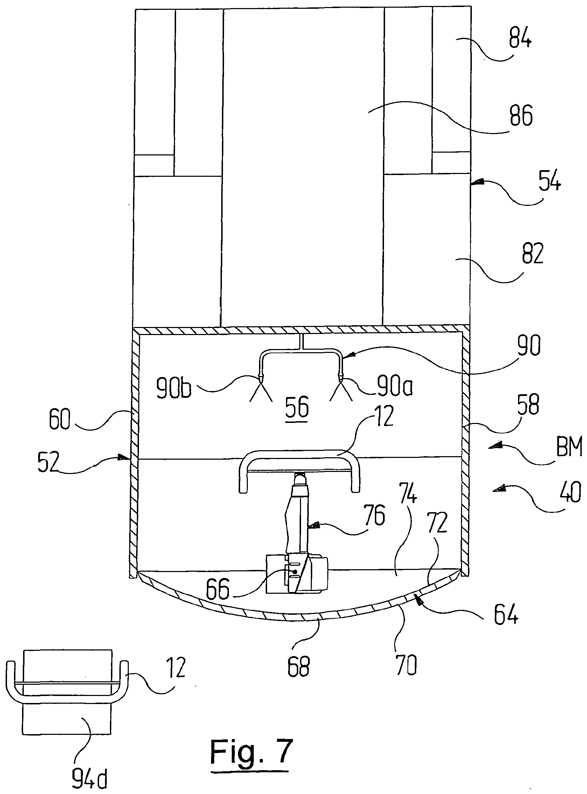

Auf dem Drehboden 74 ist als Halteeinrichtung für einen Stoßfänger 12 ein mehrachsiger Greifroboter 76 befestigt. Wahlweise kann nun die konvexe Wandfläche 70 oder die konkave Wandfläche 72 mit dem Greifroboter 76 dem Behandlungsraum 56 zugewandt sein, während die jeweils andere Wandfläche 72 bzw. 70 zum Fördertunnel 14 weist. Diese beiden Orientierungen der Wandflächen 70, 72 definieren die oben angesprochene erste und zweite Arbeitsstellung der Drehwand 64. In der in Figur 5 gezeigten ersten Arbeitsstellung der Drehwand 64 ist der Greifroboter 76 somit dem Fördertunnel 14 zugewandt und begrenzt deren erste Wandfläche 70 bereichsweise den Behandlungsraum 56. In der in Figur 7 gezeigten zweiten Arbeitsstellung der Drehwand 64 befindet sich der Greifroboter 76 somit im Behandlungsraum 56, welcher dann bereichsweise von der zweiten Wandfläche 72 begrenzt ist.

Der Behandlungsraum 56 weist oben eine horizontale Kabinendecke auf, welche als untere Begrenzung eines Luftzuführraumes 78 ausgebildet ist.

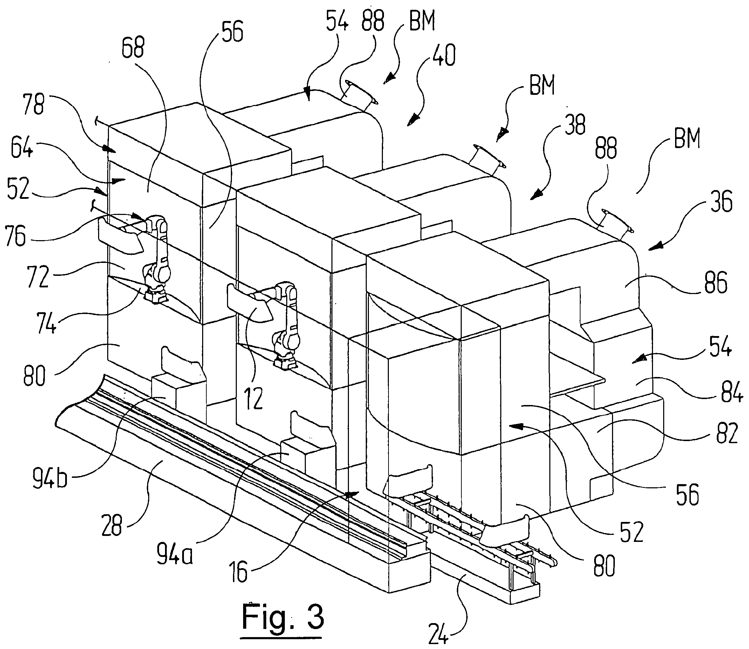

Nach unten ist der Behandlungsraum 56 offen und führt zu einem Strömungsbereich 80, über den der Behandlungsraum 56 mit einem ersten Funktionsbereich 82 der Lufteinheit 54 in Verbindung steht. Dies ist in Figur 3 bei dem ersten Reinigungsmodul 36 gut zu erkennen. Dort ist auch zu sehen, dass dem ersten Funktionsbereich 82 in Richtung nach oben ein zweiter Funktionsbereich 84 folgt, in den die Kabinenluft nach Durchströmen des ersten Funktionsbereichs 82 gelangt. Von dort strömt die Kabinenluft in einen Strömungskanal 86. Der Strömungskanal 86 ist einerseits mit dem Luftzuführraum 78 oberhalb des Behandlungsraumes 56 verbunden und weist andererseits einen Anschlussflansch 88 auf, über welchen der Strömungskanal 86 - und damit insgesamt der Strömungsweg der Kabinenluft - lösbar mit einem nicht eigens gezeigten Abluftkanal einer ebenfalls nicht eigens gezeigten zentralen Luftanlage der Behandlungsanlage 10 verbunden werden kann. Gegebenenfalls kann zwischen dem Anschlussflansch 88 und einen entsprechenden Anschluss am Abluftkanal der zentralen Luftanlage ein flexibler Schlauch befestigt werden.

Alle Behandlungsmodule BM umfassen standardisierte Anschlusseinheiten mit allen zum einwandfreien Betrieb eines Behandlungsmoduls BM erforderlichen Anschlüssen wie elektrischen Anschlüssen, einem oder mehreren Anschlüssen für Zuluft, einem oder mehreren Anschlüssen für die Lackzufuhr, einem oder mehreren Anschlüssen für eine Reinigungsmittelzufuhr und dergleichen. Bei den Lackiermodulen 40, 42 und 46 kann zur Lackversorgung gegebenenfalls ergänzend jeweils ein separates Versorgungsmodul mit dem jeweiligen Lackiermodul 40, 42, 46 zusammenarbeiten.

Abhängig von der Funktion jedes Behandlungsmoduls BM können in den Funktionsbereichen 82 und 84 Komponenten zur Aufbereitung der Kabinenluft angeordnet sein.

Im Falle der Lackiermodule 40, 42 und 46 ist im ersten Funktionsbereich 82 beispielsweise eine elektrostatisch arbeitende Abscheideeinheit angeordnet. Der zweite Funktionsbereich 84 dient als Konditionierungsbereich für gereinigte Kabinenluft.

Wie oben erwähnt, sind in dem Behandlungsraum 56 ebenfalls abhängig von der Funktion jedes Behandlungsmoduls BM unterschiedliche Behandlungseinheiten angeordnet.

Im Falle der Lackiermodule 40, 42 und 46 ist als Behandlungseinheit z.B. eine Applikationseinheit in Form einer stationären Düsenanordnung 90 für Lack an der Kabinenwand 62 angebracht, welche zwei Spitzdüsen 90a, 90b umfasst, die in Richtung auf die gegenüberliegende Drehwand 64 weisen. Gegebenenfalls können die Spritzdüsen 90a, 90b auch beweglich gelagert und ihre Abgaberichtung einstellbar sein.

Bei den Lackiermodulen 40, 42, 46 strömt Luft, die aus dem Luftzuführraum 78 kommt, durch den Behandlungsraum 56 nach unten zum Strömungsbereich 80 und nimmt dabei Overspray auf. Der Strömungsbereich 80 leitet die dann mit Overspraypartikeln beladene Kabinenluft derart zu dem ersten Funktionsbereich 82 mit dem oben erwähnten Elektroabscheider, dass sie diesen in einer Richtung von unten nach oben durchströmt. Die hiernach von Overspraypartikeln befreite Kabinenluft gelangt dann in den oberhalb des ersten Funktionsbereichs 82 angeordneten zweiten Funktionsbereich 84 der Lufteinheit 54, wo sie in an und für sich bekannter Art und Weise wieder auf die richtige Temperatur und Luftfeuchtigkeit gebracht wird. Von dort wird die gereinigte Kabinenluft wieder dem Luftzuführraum 78 oberhalb des Behandlungsraumes 56 zugeleitet, wo sie gegebenenfalls mit unverbrauchter Frischluft gemischt werden kann. Hierzu ist der Luftzuführraum 78 über den Anschlussflansch 88 mit einer Frischluftquelle der zentralen Luftanlage verbunden.

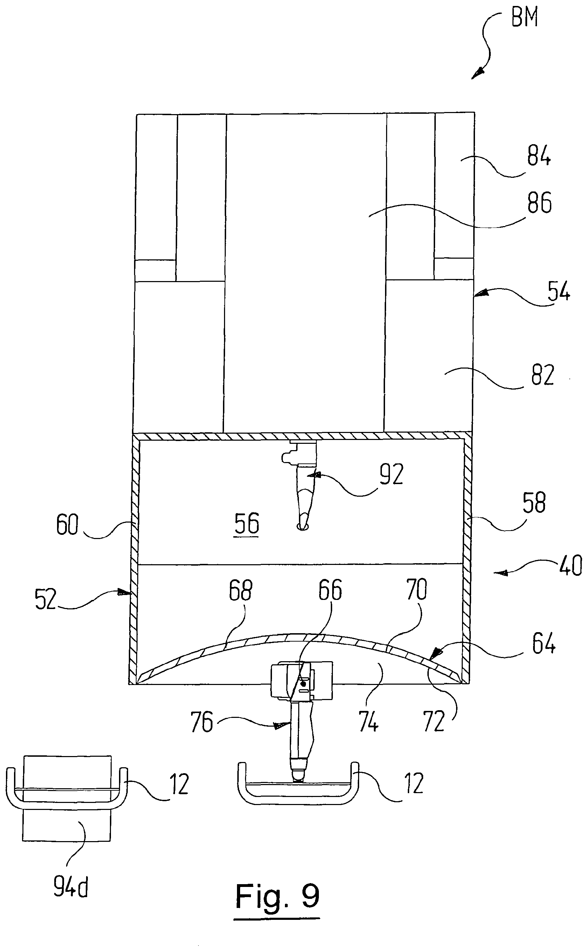

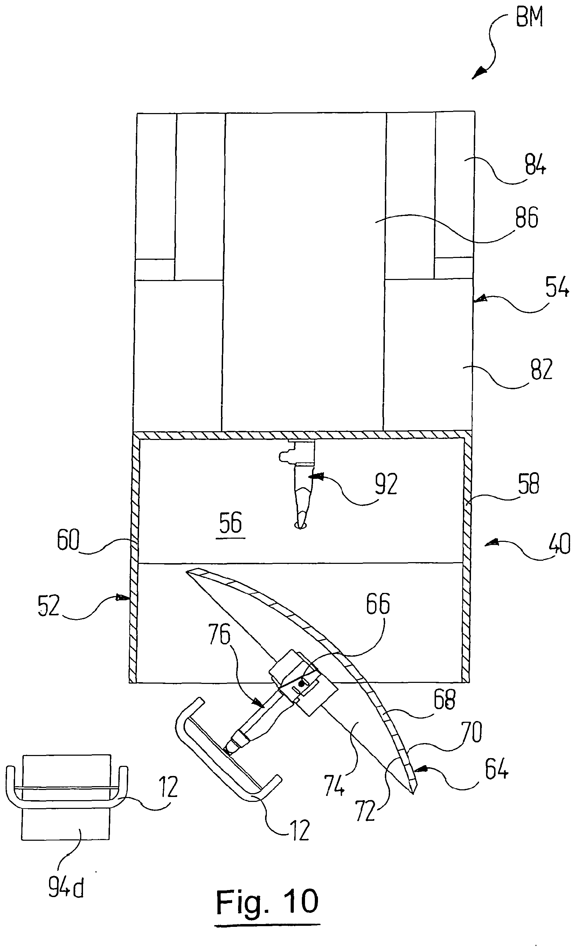

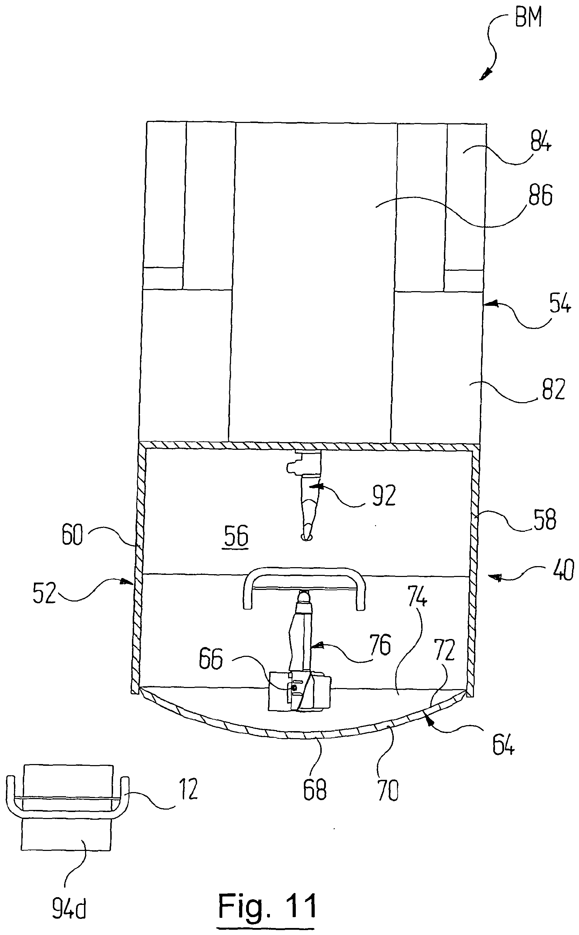

Bei einer in den Figuren 9 bis 11 gezeigten Abwandlung des Lackiermoduls 40 ist im Behandlungsraum 56 als Behandlungseinheit anstelle der Düsenanordnung 90 ein stationärer mehrachsiger Applikationsroboter 92 angeordnet, wie er an und für sich bekannt ist. Ein solcher Applikationsroboter 92 kann auch in dem zweiten Lackiermodul 42 und/oder dem dritten Lackiermodul 46 vorhanden sein.

Wie in Figuren 1 und 2 zu erkennen ist, sind in dem Bereich zwischen der Laufschiene 28 mit den Umsetzrobotern 30, 32 und den Behandlungsmodulen BM sowie den Abdunstmodulen AM entlang der Laufschiene 28 mehrere Lagertische 94 angeordnet, auf denen jeweils ein zu behandelnder Stoßfänger 12 zwischengelagert werden kann. Die Lagertische 94 sind in Förderrichtung jeweils ergänzend mit einem Buchstabenindex a bis g gekennzeichnet. Jeweils einem Behandlungsmodul BM sind dabei zwei Lagertische 94 zugeordnet, wobei jeweils ein Lagertisch 94 bezogen auf die Förderrichtung stromab und stromauf eines Behandlungsmoduls BM angeordnet ist, so dass jeder dieser beiden Lagertische 94 von dem Greifroboter 76 des entsprechenden Behandlungsmoduls BM erreicht werden kann, wenn die Drehwand 64 ihre erste Arbeitsstellung einnimmt.

Da die Greifroboter 76 des ersten Reinigungsmoduls 36 und des Trocknermoduls 50 bereits mit dem Zuführförderer 24 bzw. dem Abgabeförderer 26 zusammenarbeiten, ist diesen Modulen 40, 50 jeweils nur ein einziger Lagertisch 94a bzw. 94g zugeordnet.

Die in den Figuren 1 und 2 zu erkennenden Abdunstmodule AM umfassten ein Modulgehäuse 96, welches vom Fördertunnel 14 her zugängliche Aufnahmefächer 98 vorgibt, die mit einem Abluftkanal 100 kommunizieren. Der Abluftkanal 100 ist seinerseits über einen Anschlussflansch 102 mit dem Abluftkanal der oben erwähnten, jedoch nicht eigens gezeigten zentralen Luftanlage verbunden.

Auch die Abdunstmodule AM umfassen standardisierte Anschlusseinheiten. Bei den Abdunstmodulen AM umfasst eine solche Anschlusseinheit wenigstens elektrische Anschlüsse sowie einen oder mehrere Anschlüsse für Zuluft.

Wie insbesondere in Figur 2 zu erkennen ist, sind alle Module BM und AM jeweils von Schienenpaaren 104 mit einer ersten Tragschiene 106 und einer zweiten Tragschiene 108 getragen, die sich parallel zueinander und in einem Winkel zur Laufschiene 28 mit den Umsetzrobotern 30, 32 erstrecken, der beim vorliegenden Ausführungsbeispiel 90° beträgt. In Figur 2 sind der Übersichtlichkeit halber nur einige der Schienenpaare 104 und Tragschienen 106, 108 mit Bezugszeichen versehen. Die Abstände zwischen den beiden Tragschienen 106, 108 sind bei allen Schienenpaaren 104 gleich und alle benachbarten Schienenpaare 104 sind jeweils im selben Maße voneinander beabstandet.

Die Behandlungsmodule BM sind jeweils von den beiden Tragschienen 106, 108 eines Schienenpaares 104 getragen und weisen eine entsprechende Breite auf, so dass zwei Behandlungsmodule BM unmittelbar nebeneinander auf zwei benachbarten Schienenpaaren 104 angeordnet werden können.

Wie in den Figuren 1 und 2 gut zu erkennen ist, sind die Abdunstmodule AM beim vorliegenden Ausführungsbeispiel jedoch breiter als die Behandlungsmodule BM. Daher sind die Abdunstmodule AM von einer ersten Tragschiene 106 eines ersten Schienenpaares 104a und von einer ersten Tragschiene 106 eines benachbarten zweiten Schienenpaares 104b getragen. Dies ist in Figur 2 gut zu erkennen. Somit decken die Abdunstmodule AM die jeweils zweite Tragschiene 106 des ersten Schienenpaares 104a ab. Zwischen den Abdunstmodulen AM und dem jeweils in Förderrichtung benachbarten Behandlungsmodul BM verbleibt ein Freiraum, in welchen die nicht genutzte zweite Schiene 108 des zweiten Schienenpaares 104b liegt.

Insgesamt sind die Schienenpaare 104, die Behandlungsmodule BM und die Abdunstmodule AM so aufeinander abgestimmt, dass eine skalierte Anordnung der Behandlungsmodule BM und der Abdunstmodule AM entlang des Fördertunnels 14 ermöglicht ist. Jedes Schienenpaar 104 gibt dabei einen Positionsabschnitt 110 vor, wobei alle Positionsabschnitte 110 die gleiche Breite vorgeben und im Falle der Abdunstmodule AM zwei Positionsabschnitte 110 zu einem vergrößerten Positionsabschnitt 112 kombiniert werden, der jedoch noch schmaler ist als zwei benachbarte Positionsabschnitte 110 zusammengenommen. Bei einer Abwandlung können die Abdunstmodule AM auch so breit sein, dass sie auch von der zweiten Schiene 108 des zweiten Schienenpaares 104b getragen werden und somit zwei benachbarte Positionsabschnitte 110 einnehmen. Bei einer weiteren Abwandlung können die Abdunstmodule AM auch genauso breit sein wie die Behandlungsmodule BM.

Bei einer alternativen Ausbildung der Behandlungsanlage 10 kann auch auf die Schienen 106, 108 verzichtet werden. In diesem Fall werden die Behandlungsmodule BM und die Abdunstmodule AM beispielsweise mit Hilfe eines Krans oder dergleichen in ihre Betriebsposition gebracht oder daraus entfernt.

Die Behandlungsmodule BM und die Abdunstmodule AM sind jeweils als modulare Einheiten ausgebildet, als solche bewegbar und lösbar in ihrer in den Figuren 1 und 2 gezeigten Betriebsposition bezogen auf den Fördertunnel 14 bzw. die durch diesen vorgegebene Förderstrecke angeordnet und fixiert. Die Anzahl und Anordnung einzelner und funktionsmäßig unterschiedlicher Behandlungsmodule BM sowie die Anzahl und Anordnung von Abdunstmodulen AM kann im Rahmen der zur Verfügung stehenden Schienenpaare 104 frei an die zur Behandlung eines bestimmten Behandlungsguts notwendigen aufeinander folgenden Behandlungsschritte angepasst werden.

Wenn die Anordnung der Behandlungsmodulen BM und der Abdunstmodule AM geändert werden muss oder ein vorhandenes Modul gegen ein funktionsmäßig anderes Modul - beispielsweise ein Reinigungsmodul gegen ein Lackiermodul - ausgetauscht werden soll, wird das auszuwechselnde Modul gelöst und auf dem oder den zugehörigen Schienenpaar oder Schienenpaaren 104 von dem Fördertunnel 14 weg gefahren.

Die Schienenpaare 104 können beispielsweise zu einem weiterführenden Schienensystem führen, auf welchem ein auszutauschendes Modul weg gefahren und ein Austauschmodul zum Ziel-Schienenpaar 104 des zugehörigen Ziel-Positionsabschnitts 110 hin gefahren werden kann. Alternativ kann auch eine Transporttechnik vorhanden sein, mittels welcher ein auszutauschendes Modul von seinem Schienenpaar 104 abgehoben und abtransportiert und ein Austauschmodul auf das Ziel-Schienenpaar 104 aufgesetzt werden kann.

Die Funktionsweise eines Behandlungsmoduls BM wird nun am Beispiel des in den Figuren 4 bis 8 gezeigten Lackiermoduls 40 erläutert.

Während des gesamten Behandlungsvorgangs innerhalb der Behandlungsanlage 10 ruhen die Stoßfänger 12 auf nicht eigens gezeigten Warenträgern, welche von den Greifrobotern 76 und den Umsetzrobotern 30, 32 gehandhabt werden können.

Als Ausgangssituation des Lackiermoduls 40 sei angenommen, dass die Drehwand 64 ihre erste Arbeitsstellung einnimmt, in welcher der Greifroboter 76 zum Fördertunnel 14 weist. Der Greifroboter 76 hat bereits einen Stoßfänger 12 von dem Lagertisch 94c aufgenommen, der dem Lackiermodul 40 und dem zweiten Reinigungsmodule 38 zugeordnet ist. Dieser Lagertisch 94c ist in den Figuren 4 bis 8 nicht gezeigt.

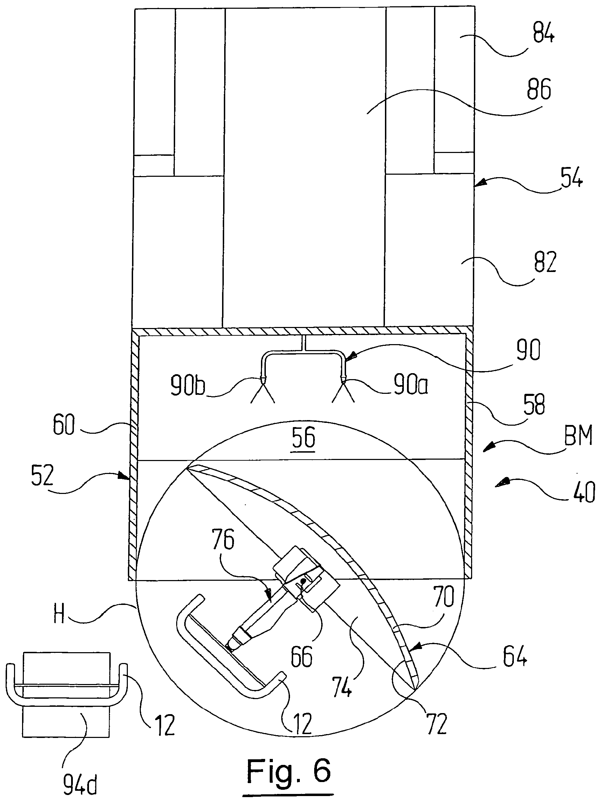

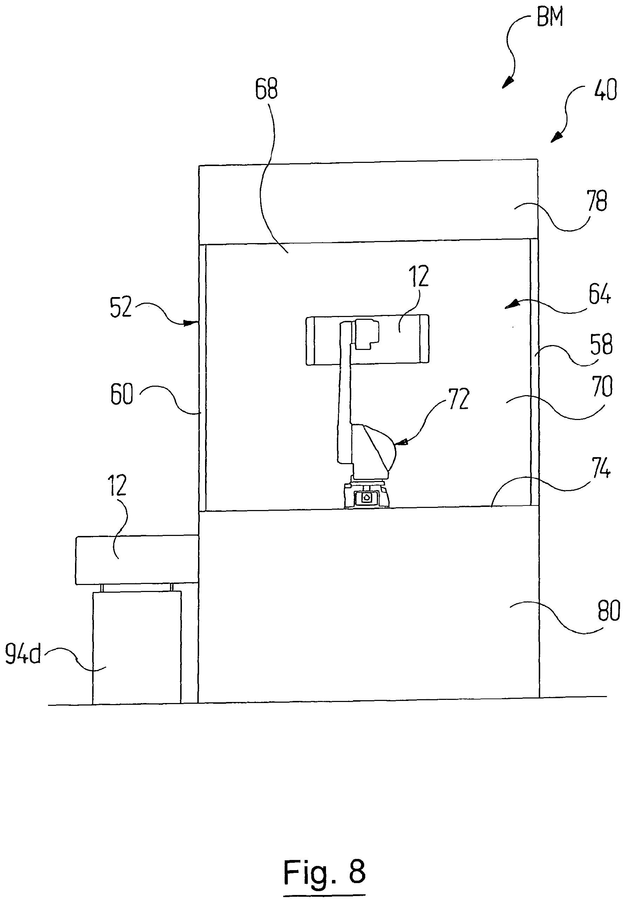

Die Drehwand 64 wird nun mittels einer nicht eigens gezeigten Antriebseinheit um 180° um ihre Drehachse 66 gedreht und in ihre zweite Arbeitsstellung gebracht, so dass ihre konkave Wandfläche 72 und der Drehboden 74 sowie der Greifroboter 76 zum Behandlungsraum 56 weisen, wie es in den Figuren 7 und 8 zu erkennen ist. Bei der Drehbewegung durchläuft die Drehwand 64 eine in Figur 6 gezeigte Zwischenstellung. Bei dem Drehvorgang können die flexiblen Gummilamellen an den Rändern des Wandteils 68 der Drehwand 64 an Wandbereichen der Behandlungskabine 52 entlang reiben, ohne dass die Gefahr einer Beschädigung dieser Wandbereiche besteht. In Figur 6 ist eine Hüllkurve mit H bezeichnet, die durch die Außenkontur der Drehwand 64 bei deren Verdrehung gebildet wird.

Nun wird der von dem Greifroboter 76 getragene Stoßfänger 12 lackiert, indem die Düsenanordnung 90 aktiviert wird und der Stoßfänger 12 durch eine entsprechende Bewegungsabfolge des Greifroboters 76 vor den Düsen 90a, 90b bewegt wird.

Der beim Lackieren anfallende Overspray wird wie oben beschrieben von der durch den Behandlungsraum 56 strömenden Kabinenluft aufgenommen und im weiteren Verlauf abgeschieden und gesammelt.

Während des Lackiervorgangs nimmt einer der Umsetzroboter 30, 32 auf der Laufschiene 28 einen bereits lackierten Stoßfänger 12 auf, der auf dem stromab des Lackiermoduls 40 vorhandenen Lagertisch 94d ruht, so dass dieser Lagertisch 94 frei wird.

Wenn der Stoßfänger 12 im Behandlungsraum 56 des Lackiermoduls 40 vollständig lackiert worden ist, wird die Drehwand 64 mittels der Antriebseinheit erneut um 180° um ihre Drehachse 66 verdreht, so dass sie nun wieder ihre erste Arbeitstellung einnimmt.

Der Greifroboter 76 legt den nun lackierten Stoßfänger 12 auf dem Lagertisch 94d ab, von wo er von einem der Umsetzroboter 30, 32 aufgenommen und einem nächsten Modul zugeführt werden kann. Hierauf wird weiter unten nochmals eingegangen.

Bei dem abgewandelten Lackiermodul 40 gemäß den Figuren 9 bis 11 erfolgt der Lackiervorgang sinngemäß entsprechend mit dem einzigen Unterschied, dass der Applikationsroboter 92 im Behandlungsraum 56 beweglich ist und der Lackauftrag mittels einer aufeinander abgestimmten Bewegung sowohl des Greifroboters 76 als auch des Applikationsroboters 92 erfolgt. Bei Verwendung des Applikationsroboters 92 können gegebenenfalls auch komplizierter aufgebauter Bauteile mit abgeschatteten Bereichen und/oder komplexen Hinterschneidungen effektiver beschichtet werden, als es mit der Düsenanordnung 90 möglich wäre.

Die Funktionsweise der in den Figuren 1 und 2 veranschaulichten Behandlungsanlage 10 zur Oberflächenbehandlung von Stoßfängern 12 insgesamt wird nun beschrieben. Wenn nachfolgend angegeben ist, dass ein Stoßfänger 12 in die Behandlungskammer 56 eines bestimmten Behandlungsmoduls BM hinein oder aus dieser heraus bewegt wird, so erfolgt dies stets, indem die zugehörige Drehwand 64 entsprechend verdreht wird, wie es oben am Beispiel des Lackiermoduls 40 erläutert wurde.

Der Zuführförderer 24 wird von außerhalb des Fördertunnels 14 mit zu lackierenden Stoßfängern 12 beladen. Der in Förderrichtung vorderste Stoßfänger 12 wird dann durch die Eingangsschleuse 16 hindurch in den Fördertunnel 14 gefördert Dort wird der Stoßfänger 12 von dem Greifroboter 76 des ersten Reinigungsmoduls 36 aufgenommen, in dessen Behandlungskammer 56 hinein bewegt und dort einer Grundreinigung unterzogen.

Die Kabinenluft wird hier über die Lufteinheit 54 des ersten Reinigungsmoduls 36 an den Abluftkanal der zentralen Luftanlage abgegeben.

Der Stoßfänger 12 wird aus dem Behandlungsraum 56 des ersten Reinigungsmoduls 36 heraus bewegt und von dem Greifroboter 76 auf den Lagertisch 94a abgelegt.

Von dort wird der Stoßfänger 12 von dem Greifroboter 76 des zweiten Reinigungsmoduls 38 aufgenommen, in dessen Behandlungskammer 56 er ein zweites Mal gereinigt wird, vorliegend mittels einer CO₂-Reinigung.

Nach erfolgter zweiter Reinigung wird der nun saubere und entfettete Stoßfänger 12 auf dem Lagertisch 94b abgelegt und hiernach von dem Greifroboter 76 des ersten Lackiermoduls 40 aufgenommen. Mittels diesem erhält der Stoßfänger 12 nun in der oben erläuterten Art und Weise eine erste Basislackierung.

Von dem ersten Lackiermodul 40 wird der Stoßfänger 12 über den Lagertisch 94c an den Greifroboter 76 des zweiten Lackiermoduls 42 übergeben und dort in entsprechender Weise mit einem zweiten Basislack versehen.

Nach diesem Lackiervorgang wird der Stoßfänger 12 nun auf dem Lagertisch 94d abgelegt. Nun fährt der Umsetzroboter 30 zu diesem Lagertisch 94d, nimmt dort den Stoßfänger 12 auf, fördert ihn zum ersten Abdunstmodul 44 und legt ihn mit dem Warenträger in eines von dessen Aufnahmefächern 98, die jeweils separat be- und entlüftet werden können.

Der Vorgang im Hinblick auf die Behandlungsmodule 36, 38, 40 und 42 sowie das erste Abdunstmodul 44 erfolgt taktweise, d.h. von außen rückt stetig ein Stoßfänger 12 durch die Eingangsschleuse 16 nach.

Die Anzahl der Aufnahmefächer 98 im Abdunstmodul 44 hängt davon ab, wie lange die Stoßfänger 12 in dem Abdunstmodul verweilen müssen. Je länger die erforderliche Abdunstzeit ist, desto mehr Aufnahmefächer 98 müssen vorhanden sein.

Die im Abdunstmodul 44 beim Abdunsten der Stoßfänger 12 frei werdenden Gase werden über dessen Abluftkanal 100 und den Anschlussflansch 102 an die zentrale Luftanlage abgegeben.

Wenn ein Stoßfänger 12 die zum Abdunsten erforderliche Verweilzeit in dem Abdunstmodul 44 verbracht hat, wird er von einem der Umsetzroboter 30, 32 entnommen und auf den Lagertisch 94e abgelegt, der dem dritten Lackiermodul 46 zugeordnet ist. Der Stoßfänger wird mittel dessen Greifroboter 76 in den Behandlungsraum 56 der es Lackiermoduls 46 eingebracht und dort mit einem Farb- oder Klarlack versehen.

Dann legt der Greifroboter 76 des Lackiermoduls 46 den Stoßfänger 12 auf dem Lagertisch 94f ab, von wo er mittels eines der Umsetzroboter 30, 32 mit dem Warenträger in eines der Aufnahmefächer 98 des zweiten Abdunstmoduls 48 gelegt wird.

Nach der geforderten Abdunstzeit wird der Stoßfänger 12 dann mittels eines der Umsetzroboter 30, 32 zum Lagertisch 94g gefördert. Der Greifroboter 76 des Trocknermoduls 50 nimmt den Stoßfänger 12 von dort auf, der Stoßfänger 12 wird in den Behandlungsraum 56 des Trocknermoduls 50 eingebracht und dort in einer Weise getrocknet, die von der Art des zuletzt auf den Stoßfänger 12 aufgetragenen Lack abhängt.

Schließlich legt der Greifroboter 76 den nun getrockneten Stoßfänger 12 auf den Abgabeförderer 26 ab, mittels welchen er durch die Ausgangsschleuse 18 aus dem Trockentunnel 14 heraus gefördert wird. Außerhalb des Fördertunnels 14 wird der Stoßfänger 12 mit einer nicht eigens gezeigten Fördertechnik seiner weiteren Bestimmung zugeführt.

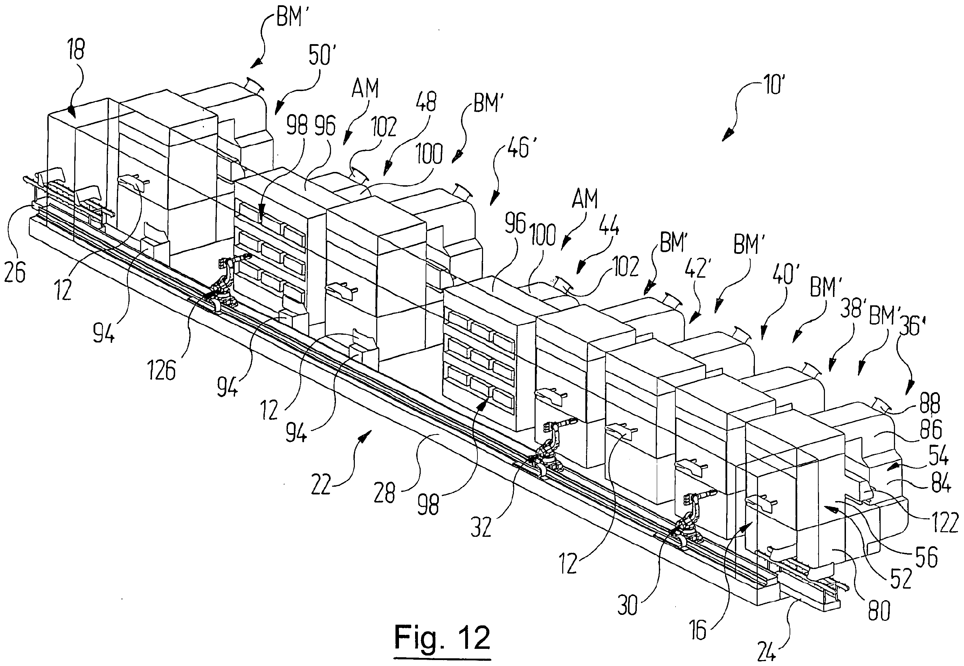

In den Figuren 12 bis 15 ist eine abgewandelte Behandlungsanlage 10' gezeigt. Dort tragen Komponenten und Bauteile, die den Komponenten und Bauteilen der Behandlungsanlage 10 gemäß den Figuren 1 bis 11 entsprechen, dieselben Bezugszeichen, wogegen abgewandelte Komponenten oder Bauteile dasselbe Bezugszeichen zuzüglich eines Striches tragen.

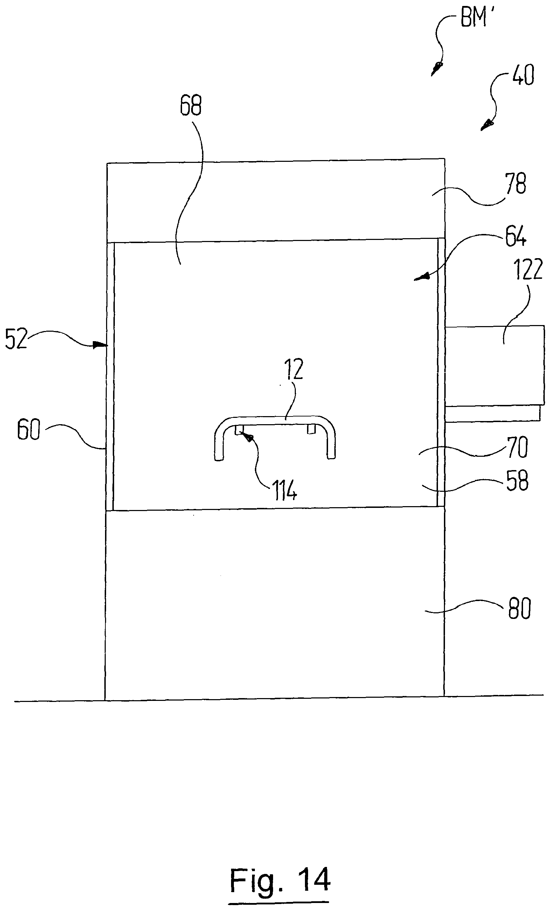

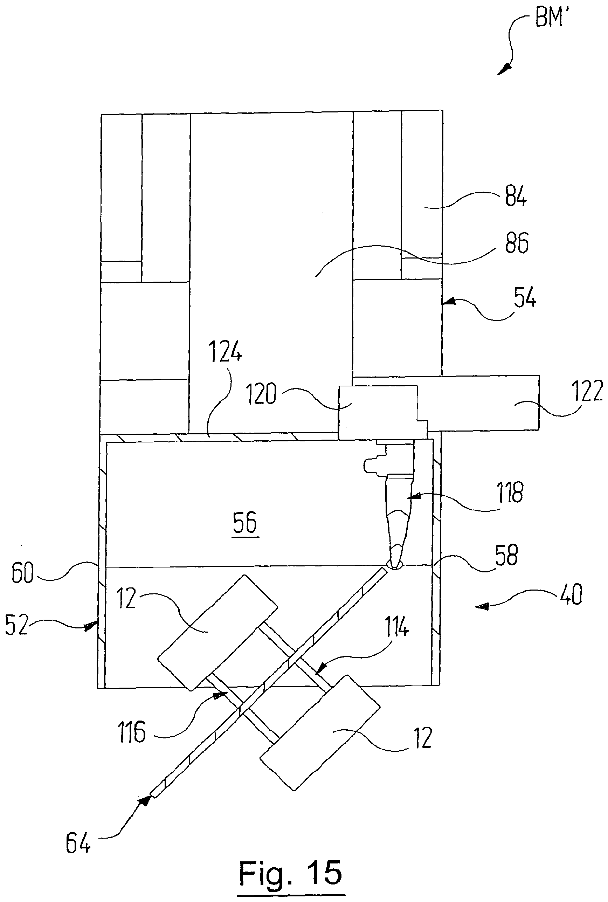

Die Behandlungsanlage 10' unterscheidet sich von der Behandlungsanlage 10 lediglich in abgewandelten Behandlungsmodulen BM', welche nachfolgend nur am Beispiel des Lackiermoduls 40' erläutert werden, von dem in den Figuren 14 und 15 nochmals eine Draufsicht und ein horizontaler Teilschnitt gezeigt ist. Sofern nichts anderes beschrieben wird, gilt das oben zu den Lackiermodulen 40, 42 und 46 gemäß den Figuren 1 bis 11 Gesagte sinngemäß entsprechend.

Bei dem Lackiermodul 40' ist das Wandteil 68' der als Förderelement dienenden Drehwand 64' nicht gekrümmt, sondern eben. Zudem umfasst die Drehwand 64' keinen Drehboden, wie es bei der gekrümmten Drehwand 64 der Fall ist.

Auf ihrer ersten ebenen Wandfläche 70' und auf ihrer gegenüberliegenden zweiten ebenen Wandfläche 72' trägt die Drehwand 64' als erste bzw. zweite Halteeinrichtung für die Stoßfänger 12 jeweils eine erste Halterung 114 bzw. eine zweite Halterung 116. In einer hier nicht eigens gezeigten Abwandlung trägt jede Wandfläche 70', 72' der Drehwand 64' mehrere erste Halterungen 114 bzw. mehrere zweite Halterungen 116, welche dann vorzugsweise jeweils übereinander angeordnet sind und dann entsprechend die erste bzw. zweite Halteeinrichtung bilden.

Mittels der nicht eigens gezeigten Antriebseinheit zum Verdrehen der Drehwand 64' kann nun wahlweise die erste Wandfläche 70' mit der ersten Halterung 114 oder die zweite Wandfläche 72' mit der zweiten Halterung 116 dem Behandlungsraum 56 des Lackiermoduls 40' zugewandt sein, während die jeweils andere Wandfläche 72' bzw. 70' mit ihrer zugehörigen Halterung 116 bzw. 114 zum Fördertunnel 14 weist. Diese beiden Orientierungen der Wandflächen 70', 72' mit den beiden Halterungen 114 bzw. 116 definieren die erste und zweite Arbeitsstellung der Drehwand 64'. In der ersten Arbeitsstellung der Drehwand 64 begrenzt somit deren erste Wandfläche 70' bereichsweise den Behandlungsraum 56, in der zweiten Arbeitsstellung der Drehwand 64' begrenzt deren zweite Wandfläche 72' bereichsweise den Behandlungsraum 56.

Im Falle des Lackiermoduls 40' ist in dessen Behandlungsraum 56 ein siebenachsiger Applikationsroboter 118 angeordnet, wie er an und für sich bekannt ist. Der Applikationsroboter 118 ist von einem Schlitten 120 getragen, welcher auf der vom Behandlungsraum 20 abliegenden Außenseite der Kabinenwand 62 in einem Schlittengehäuse 122 in horizontaler Richtung längs der Kabinenwand 62 verfahren werden kann. Das Schlittengehäuse 122 ist in Figur 12 bei dem ersten Reinigungsmodul 36', bei dem dritten Lackiermodul 46' und bei dem Trocknermodul 50' zu erkennen.

Die Kabinenwand 62 weist einen horizontalen Führungsschlitz 124 auf, durch welchen hindurch der Applikationsroboter 118 mit dem Schlitten 120 gekoppelt ist. Der Führungsschlitz 124 ist auf beiden Seiten der Kabinenwand 62 beispielsweise durch hier nicht eigens gezeigte Lamellendichtungen gegen das Schlittengehäuse 122 abgedichtet.

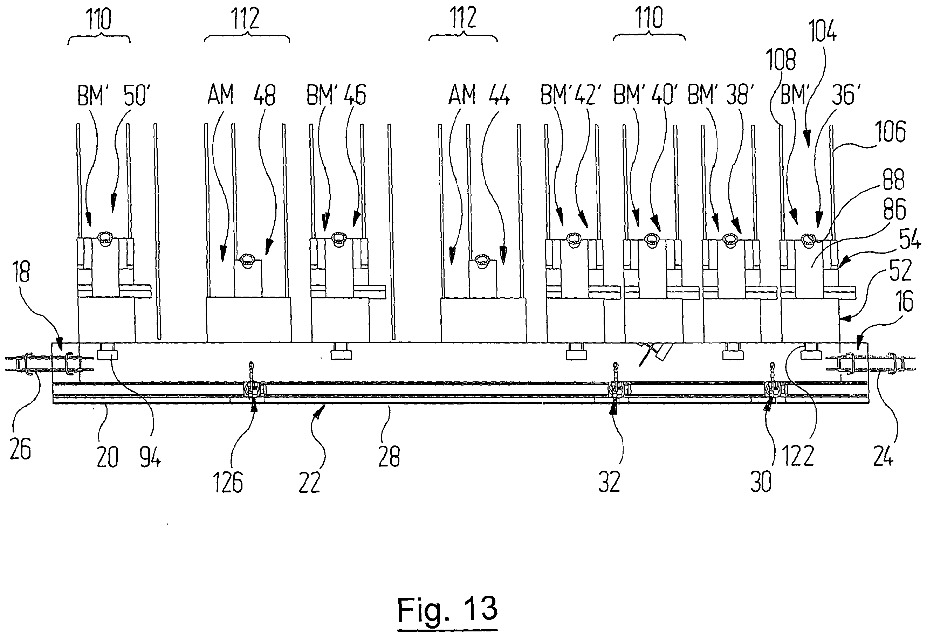

Wie in den Figuren 12 und 13 zu erkennen ist, ist dort neben den Umsetzrobotern 30, 32 ein dritter Umsetzroboter 126 auf der Laufschiene 28 angeordnet.

Dem ersten und dem zweiten Reinigungsmodul 36', 38' sowie dem ersten und dem zweiten Lackiermodul 40', 42' und dem ersten Abdunstmodul 44 sind keine Lagertische 94 zugeordnet. Die abgewandelte Behandlungsanlage 10' funktioniert wie folgt, wobei der Schleusenvorgang wie oben bei der Behandlungsanlage 10 erfolgt:
Der Umsetzroboter 30 entnimmt den ihm nächsten Stoßfänger 12 vom Zuführförderer 24 und platziert diesen auf der zunächst leeren erste Halterung 114 an der Drehwand 64' des ersten Reinigungsmoduls 36'.

Dessen Drehwand 64' wird um 180° gedreht und in ihre erste Arbeitsstellung gebracht, in welcher ihre Wandfläche 70' mit der ersten Halterung 114 zum Behandlungsraum 56 des ersten Reinigungsmoduls 36' weist. Dann wird der sich nun in dem Behandlungsraum 56 des ersten Reinigungsmoduls 36' befindliche Stoßfänger 12 gereinigt.

Während des Reinigungsvorgangs nimmt der Umsetzroboter 30 nun den nächsten Stoßfänger 12 vom Zuführförderer 24 und positioniert diesen auf der zweiten Halterung 116 an der Wandfläche 72' der Drehwand 64' des Reinigungsmoduls 36'.

Wenn der Stoßfänger 12 auf der ersten Halterung 114 vollständig gereinigt worden ist, wird die Drehwand 64' des ersten Reinigungsmoduls 36' um 180° um ihre Drehachse 66 verdreht, so dass sie nun ihre zweite Arbeitstellung einnimmt.

Der gerade gereinigte Stoßfänger 12 auf der ersten Halterung 114 befindet sich nun im Fördertunnel 14, wogegen die zweite Halterung 116 der Drehwand 64' den entsprechenden noch ungereinigten Stoßfänger 12 im Behandlungsraum 56 des ersten Reinigungsmoduls 37' trägt.

Dort wird nun dieser Stoßfänger 12 auf der zweiten Halterung 116 gereinigt. Währendessen entnimmt der zweite Umsetzroboter 32 den bereits gereinigten Stoßfänger 12 von der ersten Halterung 114 des ersten Reinigungsmoduls 36' und setzt ihn auf die erste Halterung 114 des zweiten Reinigungsmoduls 38'. Derweil entnimmt der erste Umsetzroboter 30 einen weiteren Stoßfänger 12 von dem Zuführförderer 24 und setzt in auf die nun frei gewordene erste Halterung 114 des ersten Reinigungsmoduls 36'.

Die oben zum ersten Reinigungsmodul 36' erläuterten aufeinanderfolgenden Reinigungsvorgänge mit entsprechender Drehung der Drehwand 64' und Förderung der Stoßfänger 12 erfolgt bei dem zweiten Reinigungsmodul 38' und den folgenden ersten und zweiten Lackiermodulen 40' und 42' sinngemäß entsprechend. Auf diese Weise werden die Stoßfänger 12 somit taktweise durch die Behandlungsanlage 10' zunächst von einem Modul BM' zum nächsten gefördert.

Die das zweite Lackiermodul 42' verlassenden Stoßfänger 12 werden von dem dritten Umsetzroboter 126 in jeweils ein Aufnahmefach des ersten Abdunstmoduls 44 abgelegt.

Bei den Lackiermodulen 40', 42' und 46' wird der Applikationsroboter 118 im Behandlungsraum 56 vor jeder Drehung der zugehörigen Drehwand 64' in eine in Figur 15 bei dem Lackiermodul 40' zu erkennende seitliche Sicherheitsstellung gebracht, so dass die Drehwand 64' den Applikationsroboter 118 während ihrer Bewegung nicht berühren kann. Um dies zu veranschaulichen, ist die Drehwand 64' des ersten Lackiermoduls 40' in Figur 15 in einer Stellung zwischen der ersten und der zweiten Arbeitsstellung während des Drehvorganges gezeigt.

In dem jeweiligen Behandlungsraum 56 des entsprechenden Lackiermoduls 40', 42' oder 46' wird der jeweilige Stoßfänger 12 auf der ersten Halterung 114 oder 116 lackiert, indem der Applikationsroboter 118 entsprechend angesteuert wird.

In entsprechender Weise wird ein ausreichend lange in dem ersten Abdunstmodul 44 gelagerter Stoßfänger 12 von dem dritten Umsetzroboter 126 zum dritten Lackiermodul 46' gefördert und an dessen Halterung 114 oder 116 übergeben, je nachdem, welche Arbeitstellung dessen Drehwand 64' einnimmt.

Zuvor wurde ein auf der entsprechenden Halterung 114 oder 116 befindlicher, gerade im dritten Lackiermodul 46' beschichteter Stoßfänger 12 von dem Umsetzroboter 126 aufgenommen und in dem zweiten Abdunstmodul 48 abgelegt.

Von dort wird ein Stoßfänger 12 dann mittels des Umsetzroboters 126 zum Trocknermodul 50 gefördert und entsprechend auf eine Halterung 114 oder 116 abgelegt, um dort getrocknet zu werden.

Der Beschickungs- und Entnahmevorgang mit der entsprechenden Drehung der Drehwand 64' läuft somit für alle Behandlungsmodule 36', 38', 40', 42', 46' und 50' grundsätzlich gleich ab.

Insgesamt ist mit den Behandlungsanlagen 10 und 10' jeweils eine Behandlungsanlage zur Oberflächenbehandlung von Gegenständen geschaffen, die mit einer äußerst hohen Flexibilität an die für bestimmte Gegenstände notwendige Behandlungsabfolge angepasst werden kann. Diese Anpassung ist durch das Modulprinzip in Form der Behandlungsmodule BM bzw. BM' und Abdunstmodule AM möglich, da hierdurch einzelne Module auf unkomplizierte Weise ausgetauscht oder deren Betriebspositionen entlang der Behandlungstrecke einfach verändert werden können.

Da die Behandlungsmodule BM einen stets gleichen Grundaufbau haben, ist ihre Herstellung kostengünstiger, als individuell gefertigte Einzelmodule.

Wenn z.B. ein Behandlungsmodul BM' als Trocknermodul 50' verwendet werden soll, so umfasst dieses Modul 50' zwar das Schlittengehäuse 122. Diese wird in diesem Fall jedoch einfach nicht genutzt, wenn im Behandlungsraum 56 kein Applikationsroboter, sondern beispielsweise UV-Strahler angeordnet sind.

Die Behandlungsmodule BM oder BM' können durch entsprechende Arbeitsaggregate zur Durchführung aller im Rahmen einer Oberflächenbehandlung üblicherweise anfallenden Arbeitsschritte modifiziert werden.

In einer Abwandlung kann die Gesamtanlage 10 auch als Behandlungsturm mit vertikal übereinander angeordeten Behandlungmodulen BM oder BM' und Abdunstmodulen AM ausgebildet sein.

## Patentansprüche

1. Anlage zur Oberflächenbehandlung von Gegenständen, insbesondere von Karosserieteilen, mit
a) wenigstens zwei Behandlungskabinen (52), welche jeweils einen Behandlungsraum (56) vorgeben;
b) einer Fördereinrichtung (22), mittels welcher die Gegenstände (12) entlang einer Förderstrecke (14) an jeweils eine der Behandlungskabinen (52) heran, in den Behandlungsraum (56) dieser Behandlungskabine (52) hinein, aus dem Behandlungsraum (56) dieser Behandlungskabine (52) heraus und von dieser Behandlungskabine (52) weg förderbar sind;
wobei
c) jede Behandlungskabine (52) von jeweils einer modularen Einheit (BM, BM') in Form eines Behandlungsmoduls (BM, BM') umfasst ist, welche als solche bewegbar ist und lösbar in einer Betriebsposition bezogen auf die Förderstrecke (14) angeordnet und fixiert ist,
**dadurch gekennzeichnet, dass**
d) entlang der Förderstrecke (14) eine oder mehrere Führungsschienen (106, 108) angeordnet sind, auf welchen eine jeweilige modulare Einheit (BM, BM', AM) verfahrbar ist.

2. Anlage nach Anspruch 1, **dadurch gekennzeichnet, dass** jedes Behandlungsmodul (BM, BM') eine standardisierte Anschlusseinheit mit Anschlüssen für zum Betrieb des Behandlungsmoduls (BM, BM') erforderliche Verbrauchsmittel, insbesondere mit Anschlüssen für alle zum Betrieb des Behandlungsmoduls erforderliche Verbrauchsmittel, umfasst.

3. Anlage nach Anspruch 1 oder 2, **dadurch gekennzeichnet, dass** das Behandlungsmodul (BM, BM') eine Lufteinheit (54) umfasst, welche in Strömungsverbindung mit dem Behandlungsraum (56) der Behandlungskabine (52) steht und durch welche ein Luftstrom durch den Behandlungsraum (56) erzeugbar ist.

4. Anlage nach Anspruch 3, **dadurch gekennzeichnet, dass** die Lufteinheit (54) abhängig vom Verwendungszeck des Behandlungsmoduls (BM, BM') Komponenten zur Aufbereitung von in dem Behandlungsraum (56) entstehender Kabinenluft umfasst.

5. Anlage nach Anspruch 3 oder 4, **dadurch gekennzeichnet, dass** das die Lufteinheit (54) einen Anschlussflansch (88) umfasst, mit welcher der Strömungsweg der aus dem Behandlungsraum (56) abströmenden Kabinenluft lösbar mit einem Abluftkanal einer zentralen Luftanlage und/oder ein Luftzuführraum (78) der Behandlungskabine (52) lösbar mit einer Frischluftquelle einer zentralen Luftanlage verbindbar ist.

6. Anlage nach einem der Ansprüche 1 bis 5, **dadurch gekennzeichnet, dass** die Behandlungsmodule (BM, BM') modulare Einheiten (BM, BM') einer ersten Art sind und wenigsten eine modulare Einheit (AM) einer zweiten Art vorhanden ist, die von den Behandlungsmodulen (BM, BM') baulich verschieden ist.

7. Anlage nach einem der Ansprüche 1 bis 6, **dadurch gekennzeichnet, dass** mehrere Führungsschienen (106, 108) vorgesehen sind, die verschiedenen modularen Einheiten (BM, BM', AM) zuordenbar sind und in einem Winkel, insbesondere in einem Winkel von 90°, zur Förderstrecke (14) verlaufen.

8. Anlage nach einem der Ansprüche 1 bis 7, **dadurch gekennzeichnet, dass** die Führungsschienen (106, 108) Positionsabschnitte (110, 112) für die modularen Einheiten (BM, BM', AM) vorgeben, in welchen die modularen Einheiten (BM, BM', AM) ihre jeweilige Betriebsposition einnehmen.

9. Anlage nach Anspruch 8, **dadurch gekennzeichnet, dass** die Führungsschienen derart angeordnet sind, dass die Positionsabschnitte (110, 112) in gleichmäßigen Abständen entlang der Förderstrecke (14) angeordnet sind.

10. Anlage nach einem der Ansprüche 1 bis 9, **dadurch gekennzeichnet, dass** jedes Behandlungsmodul (BM, BM') eine dem Behandlungsraum (56) zugeordnete Drehwand (64, 64') mit einer ersten Wandfläche (70, 70') und einer zweiten Wandfläche (72, 72'), insbesondere einer der ersten Wandfläche (70, 70') gegenüberliegenden zweiten Wandfläche (72, 72') umfasst.

11. Anlage nach Anspruch 10, **dadurch gekennzeichnet, dass** wenigsten eine der Wandflächen (70, 70', 72, 72') eine Halteeinrichtung (76, 112, 114) für zumindest einen zu behandelnden Gegenstand (12) trägt.

12. Anlage nach Anspruch 11, **dadurch gekennzeichnet, dass** die Halteeinrichtung (76) ein Greifroboter (76) ist.

13. Anlage nach einem der Ansprüche 1 bis 12, **dadurch gekennzeichnet, dass** die Fördereinrichtung (22) wenigstens einen entlang der Förderstrecke (14) verfahrbaren Umsetzroboter (30, 32, 126) umfasst.

## Claims

1. An installation for the surface treatment of articles, in particular of vehicle body parts, with
a) at least two treatment booths (52), which each define one treatment chamber (56);
b) a conveying device (22), by means of which the articles (12) may be conveyed along a conveying path (14) to in each case one of the treatment booths (52), into the treatment chamber (56) of this treatment booth (52), out of the treatment chamber (56) of this treatment booth (52) and away from this treatment booth (52);
wherein
c) each treatment booth (52) is enclosed in each case by a modular unit (BM, BM') in the form of a treatment module (BM, BM'), which unit may be moved as a unit and is arranged and fixed detachably in an operating position relative to the conveying path (14),
**characterized in that**
d) along the conveying path (14), one or more guide rails (106, 108) are arranged, on which a particular modular unit (BM, BM', AM) may be displaced.

2. An installation according to claim 1, **characterized in that** each treatment module (BM, BM') comprises a standardised connecting unit with connections for consumables needed for operation of the treatment module (BM, BM'), in particular with connections for all the consumables needed to operate the treatment module.

3. An installation according to claim 1 or claim 2, **characterized in that** the treatment module (BM, BM') comprises an air unit (54), which is in flow connection with the treatment chamber (56) of the treatment booth (52) and by means of which an air stream through the treatment chamber (56) may be produced.

4. An installation according to claim 3, **characterized in that**, depending on the purpose of the treatment module (BM, BM'), the air unit (54) comprises components for reprocessing booth air arising in the treatment chamber (56).

5. An installation according to claim 3 or claim 4, **characterized in that** the air unit (54) comprises a connecting flange (88), with which the flow path of the booth air flowing out of the treatment chamber (56) may be detachably connected with an exhaust air duct of a central air system and/or an air feed space (78) of the treatment booth (52) may be detachably connected with a fresh air source of a central air system.

6. An installation according to any one of claims 1 to 5, **characterized in that** the treatment modules (BM, BM') are modular units (BM, BM') of a first type and at least one modular unit (AM) of a second type is present, which is structurally different from the treatment modules (BM, BM').

7. An installation according to any one of claims 1 to 6, **characterized in that** a plurality of guide rails (106, 108) are provided, which may be associated with different modular units (BM, BM', AM) and extend at an angle, in particular at an angle of 90°, to the conveying path (14).

8. An installation according to any one of claims 1 to 7, **characterized in that** the guide rails (106, 108) predetermine positioning sections (110, 112) for the modular units (BM, BM', AM), in which the modular units (BM, BM', AM) adopt their respective operating positions.

9. An installation according to claim 8, **characterized in that** the guide rails are arranged in such a way that the positioning sections (110, 112) are arranged at uniform distances along the conveying path (14).

10. An installation according to any one of claims 1 to 9, **characterized in that** each treatment module (BM, BM') comprises a rotary wall (64, 64') associated with the treatment chamber (56), said rotary wall having a first wall surface (70, 70') and a second wall surface (72, 72'), in particular a second wall surface (72, 72') opposite the first wall surface (70, 70').

11. An installation according to claim 10, **characterized in that** at least one of the wall surfaces (70, 70', 72, 72') carries a holding device (76, 112, 114) for at least one article (12) to be treated.

12. An installation according to claim 11, **characterized in that** the holding device (76) is a gripper robot (76).

13. An installation according to any one of claims 1 to 12, **characterized in that** the conveying means (22) comprises at least one transfer robot (30, 32, 126) displaceable along the conveying path (14).

## Revendications

1. Installation pour le traitement de surface d'objets, en particulier de pièces de carrosserie, comprenant
a) au moins deux cabines de traitement (52) qui définissent à chaque fois un espace de traitement (56) ;
b) un dispositif de transport (22) au moyen duquel les objets (12) peuvent être transportés le long d'une trajectoire de transport (14), à chaque fois vers l'une des cabines de traitement (52), dans l'espace de traitement (56) de cette cabine de traitement (52), hors de l'espace de traitement (56) de cette cabine de traitement (52) et à l'écart de cette cabine de traitement (52) ;
dans laquelle
c) chaque cabine de traitement (52) appartient à une unité modulaire respective (BM, BM') sous la forme d'un module de traitement (BM, BM') qui peut être déplacé en tant que tel et qui est disposé et fixé de manière amovible dans une position fonctionnelle par rapport à la trajectoire de transport (14),
**caractérisée en ce que**
d) le long de la trajectoire de transport (14) sont disposés un ou plusieurs rails de guidage (106, 108) sur lesquels une unité modulaire respective (BM, BM', AM) peut être déplacée.

2. Installation selon la revendication 1, **caractérisée en ce que** chaque module de traitement (BM, BM') comprend une unité de raccordement standardisée avec des raccords pour des moyens de consommation nécessaires pour le fonctionnement du module de traitement (BM, BM'), en particulier avec des raccords pour tous les moyens de consommation nécessaires pour le fonctionnement du module de traitement.

3. Installation selon la revendication 1 ou 2, **caractérisée en ce que** le module de traitement (BM, BM') comprend une unité de ventilation (54) qui est en liaison d'écoulement avec l'espace de traitement (56) de la cabine de traitement (52) et qui permet de générer un flux d'air à travers l'espace de traitement (56).

4. Installation selon la revendication 3, **caractérisée en ce que** l'unité de ventilation (54), en fonction de l'utilisation envisagée du module de traitement (BM, BM'), comprend des composants de traitement de l'air de cabine présent dans l'espace de traitement (56).

5. Installation selon la revendication 3 ou 4, **caractérisée en ce que** l'unité de ventilation (54) comprend une bride de raccordement (88) avec laquelle le trajet d'écoulement de l'air de cabine sortant de l'espace de traitement (56) peut être connecté de manière amovible à un canal d'évacuation d'air d'une installation de ventilation centrale et/ou un espace d'alimentation en air (78) de la cabine de traitement (52) peut être connecté de manière amovible à une source d'air frais d'une installation de ventilation centrale.

6. Installation selon l'une quelconque des revendications 1 à 5, **caractérisée en ce que** les modules de traitement (BM, BM') sont des unités modulaires (BM, BM') d'un premier type et au moins une unité modulaire (AM) d'un deuxième type est prévue, laquelle présente une construction différente de celle des modules de traitement (BM, BM').

7. Installation selon l'une quelconque des revendications 1 à 6, **caractérisée en ce que** plusieurs rails de guidage (106, 108) sont prévus, lesquels peuvent être associés à différentes unités modulaires (BM, BM', AM) et s'étendent suivant un angle, en particulier un angle de 90°, par rapport à la trajectoire de transport (14).

8. Installation selon l'une quelconque des revendications 1 à 7, **caractérisée en ce que** les rails de guidage (106, 108) définissent des segments de positions (110, 112) pour les unités modulaires (BM, BM', AM) dans lesquels les unités modulaires (BM, BM', AM) adoptent leur position fonctionnelle respective.

9. Installation selon la revendication 8, **caractérisée en ce que** les rails de guidage sont disposés de telle sorte que les segments de positions (110, 112) soient disposés à intervalles réguliers le long de la trajectoire de transport (14) .

10. Installation selon l'une quelconque des revendications 1 à 9, **caractérisée en ce que** chaque module de traitement (BM, BM') comprend une paroi rotative (64, 64') associée à l'espace de traitement (56), avec une première surface de paroi (70, 70') et une deuxième surface de paroi (72, 72'), en particulier une deuxième surface de paroi (72, 72') opposée à la première surface de paroi (70, 70').

11. Installation selon la revendication 10, **caractérisée en ce qu'**au moins l'une des surfaces de paroi (70, 70', 72, 72') porte un dispositif de retenue (76, 112, 114) pour au moins un objet (12) à traiter.

12. Installation selon la revendication 11, **caractérisée en ce que** le dispositif de retenue (76) est un robot de préhension (76).

13. Installation selon l'une quelconque des revendications 1 à 12, **caractérisée en ce que** le dispositif de transport (22) comprend au moins un robot de manipulation (30, 32, 126) déplaçable le long de la trajectoire de transport (14).
